# EUROPEAN PATENT SPECIFICATION

(11) **EP 3 860 210 B1**
(45) Date of publication and mention of the grant of the patent: **11.12.2024**
(21) Application number: 19864791.9
(22) Date of filing: 27.09.2019
(51) Int. Cl.: H04W 28/06

(54) **TERMINAL DEVICE CAPABILITY INFORMATION PROCESSING METHOD, TERMINAL DEVICE AND NETWORK SIDE DEVICE**
VERFAHREN ZUR VERARBEITUNG VON KAPAZITÄTSINFORMATIONEN EINER ENDGERÄTEVORRICHTUNG, ENDGERÄTEVORRICHTUNG UND NETZWERKSEITIGE VORRICHTUNG
PROCÉDÉ DE TRAITEMENT D'INFORMATIONS DE CAPACITÉ DE DISPOSITIF TERMINAL, DISPOSITIF TERMINAL ET DISPOSITIF CÔTÉ RÉSEAU

(30) Priority: 27.09.2018 CN 201811132639
(43) Date of publication of application: 04.08.2021
(73) Proprietor: VIVO MOBILE COMMUNICATION CO., LTD., Dongguan, Guangdong 523860 (CN)
(72) Inventor: WU, Yumin, Dongguan, Guangdong 523860 (CN); MA, Yue, Dongguan, Guangdong 523860 (CN)
(74) Representative: Winter, Brandl - Partnerschaft mbB
(86) International application number: PCT/CN2019/108516
(87) International publication number: WO 2020/063852

(56) References cited:
- EP-A1- 3 499 954
- WO-A1-2018/039974
- WO-A1-2018/039974
- WO-A1-2018/121347
- RAN2: "Reply LS on the problem of UE Radio Capability information size", vol. SA WG2, no. Sapporo, Japan; 20141013 - 20141017, 12 October 2014 (2014-10-12), XP050891248, Retrieved from the Internet <URL:http://www.3gpp.org/ftp/tsg_sa/WG2_Arch/TSGS2_105_Sapporo/Docs/> [retrieved on 20141012]
- VIVO: "Consideration on RRC Segmentation", 3GPP TSG-RAN WG2 MEETING #103 BIS R2-1814191, 12 October 2018 (2018-10-12), XP051523645
- HUAWEI ET AL.: "Segmented Radio Capability Report", SA WG2 MEETING #128BIS S 2-188073, 24 August 2018 (2018-08-24), XP051537014

## Description

### TECHNICAL FIELD

This disclosure relates to the field of communications technologies, and in particular, to a method for processing terminal device capability information, a terminal device, and a network-side device.

### BACKGROUND

In a future mobile communications system (for example, a fifth generation (5th generation, 5G) communications system), in order to better configure an air interface connection for user equipment (User Equipment, UE) based on a capability of the user equipment, a network side transmits capability request information to the UE, and the UE reports capability information of the UE to the network side based on the capability request information transmitted by the network side, for example, reports the capability information of the UE by using a UE capability information (namely, UE Capability Information) message. In an actual situation, the capability information of the UE is usually transmitted by using a packet data convergence protocol (Packet Data Convergence Protocol, PDCP) service data unit (Service Data Unit, SDU). However, in the related art, when capability information that needs to be reported by the UE exceeds a maximum size of the PDCP SDU, there is no related solution to processing related to the capability information of the UE.

RAN2: "Reply LS on the problem of UE Radio Capability information size", 3GPP DRAFT; S2-143421_R2-144659, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE, vol. SA WG2, no. Sapporo, Japan; 20141013 - 20141017 12 October 2014 (2014-10-12), XP050891248, discusses the problems and the request to provide guidance on the maximum size of the E-UTRA radio capabilities an MME should be capable to store.. Further, WO 2018/039974 Al discloses a method and apparatus for reporting user equipment capability information.

### SUMMARY

The invention is defined by the independent claims. Embodiments are defined by the dependent claims.

### BRIEF DESCRIPTION OF DRAWINGS

To describe the technical solutions in the embodiments of this disclosure more clearly, the following briefly introduces the accompanying drawings required for describing the embodiments of this disclosure. Apparently, the accompanying drawings in the following description show merely some embodiments of this disclosure, and a person of ordinary skill in the art may still derive other drawings from these accompanying drawings without creative efforts.
FIG 1 is a flowchart of initial access and UE capability reporting provided in the related art;
FIG 2 is a structural diagram of a network system applicable to an embodiment of this disclosure;
FIG 3 is a flowchart of a method for processing terminal device capability information according to an embodiment of this disclosure;
FIG 4 is a flowchart of another method for processing terminal device capability information according to an embodiment of this disclosure;
FIG 5 is a flowchart of another method for processing terminal device capability information according to an embodiment of this disclosure;
FIG 6 is a flowchart of another method for processing terminal device capability information according to an embodiment of this disclosure;
FIG 7 is a flowchart of another method for processing terminal device capability information according to an embodiment of this disclosure;
FIG 8 is a structural diagram of a terminal device according to an embodiment of this disclosure;
FIG 9 is a structural diagram of a network-side device according to an embodiment of this disclosure;
FIG 10 is a structural diagram of another terminal device according to an embodiment of this disclosure; and
FIG 11 is a structural diagram of another network-side device according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some but not all of the embodiments of this disclosure. Theprotection scope of this disclosure is defined by the appended claim set.

For ease of understanding, the following describes some terms involved in the embodiments of this disclosure:

### Initial access and UE capability reporting:

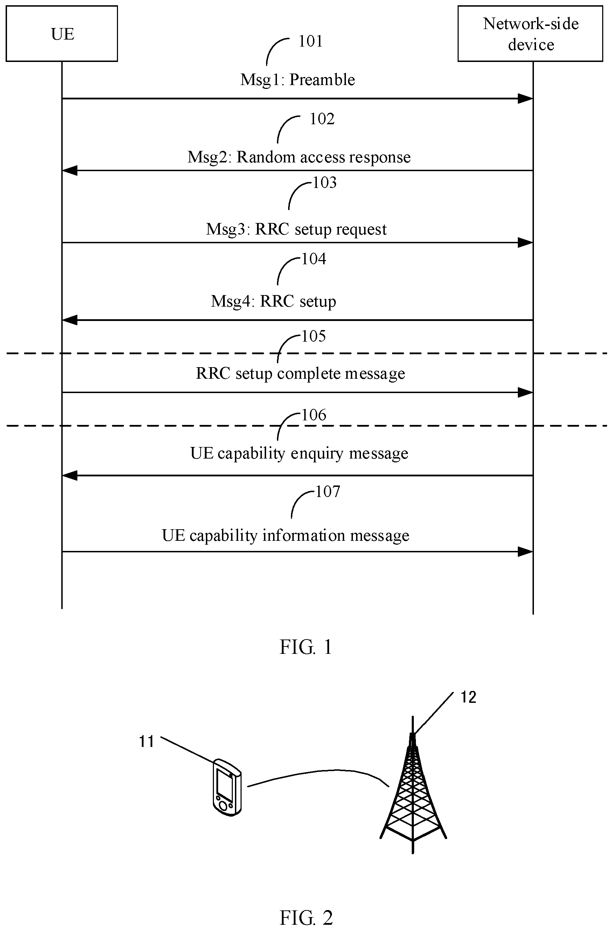

Referring to FIG 1, the initial access and UE capability reporting may include the following steps.

Step 101: UE initiates a connection establishment process, initiates a random access process, and transmits an Msg1, where the Msg1 carries a preamble (namely, preamble).

Step 102: A network-side device transmits, based on the Msg1 transmitted by the UE, an Msg2 carrying a random access response (Random Access Response, RAR for short), where the Msg2 further carries an uplink resource used for transmitting an Msg3.

Step 103: The UE transmits the Msg3 based on the resource allocated in the Msg2.

For example, an RRC setup request (namely, RRCSetupRequest) message in a 5G system or an RRC connection request (namely, RRCConnectionRequest) message of a fourth generation (4th generation, 4G) long term evolution (Long Term Evolution, LTE) system.

Step 104: The network-side device transmits an Msg4 of the random access process to the UE based on the Msg3 transmitted by the UE.

Specifically, after contention resolution is successful, the UE establishes a corresponding RRC connection. For example, the network-side device transmits a contention resolution message to the UE. In addition, for the 5G system, the Msg4 carries an RRC setup (namely, RRCSetup) message; for the 4G LTE system, the Msg4 carries an RRC connection setup (namely, RRCConnectionSetup) message.

Step 105: After executing a connection configuration message delivered by the network-side device, the UE feeds back a connection configuration complete message to the network side.

For example, in the 5G system, the connection configuration complete message may be an RRC setup complete (namely, RRCSetupComplete) message; in the 4G LTE system, the connection configuration complete message may be an RRC connection setup complete (namely, RRCConnectionSetupComplete) message.

Step 106: The network-side device transmits capability request information to the UE.

In this step, in order to better configure an air interface connection for the UE based on the capability of the UE, the network-side device transmits the capability request information to the UE, for example, a UE capability enquiry (namely, UECapabilityEnquiry) message.

Step 107: The UE reports capability information of the UE to the network side based on the request information of the network side.

For example, the capability information of the UE is reported by using a UE capability information (namely, UECapabilityInformation) message.

### Description of a size of the packet data convergence protocol (Packet Data Convergence Protocol, PDCP) packet:

For example, in the 4G system, a maximum packet size value of a PDCP service data unit (Service Data Unit, SDU) at the PDCP layer is 8188 bytes. In the 5G system, a maximum packet size value of a PDCP SDU at the PDCP layer is 9000 bytes.

### RRC message segmentation:

When a size of an RRC message exceeds the maximum size of the PDCP SDU, the RRC message needs to be divided into a plurality of small segments and transmitted to the PDCP layer for transmission, and a size of each segment does not exceed the maximum size of the PDCP SDU.

An embodiment of this disclosure provides a method for processing terminal device capability information. Referring to FIG 2, FIG 2 is a structural diagram of a network system applicable to an embodiment of this disclosure. As shown in FIG 2, the network system includes a terminal device 11 and a network-side device 12. The terminal device 11 may be a terminal device-side device such as a mobile phone, a tablet computer (Tablet Personal Computer), a laptop computer (Laptop Computer), a personal digital assistant (Personal Digital Assistant, PDA for short), a mobile Internet device (Mobile Internet Device, MID), or a wearable device (Wearable Device). It should be noted that a specific type of the terminal device 11 is not limited in the embodiments of this disclosure. The network-side device 12 may be a base station, such as a macro base station, an LTE eNB, a 5G NR NB, or a gNB. The network-side device 12 may also be a small cell, for example, a small cell such as a low power node (Low Power Node, LPN) pico or femto, or the network-side device 12 may be an access point (Access Point, AP). The base station may alternatively be a network node formed by a central unit (Central Unit, CU) and a plurality of transmission reception points (Transmission Reception Point, TRP) managed and controlled by the central unit. It should be noted that a specific type of the network-side device 12 is not limited in the embodiments of this disclosure.

In this embodiment of this disclosure, when the terminal device 11 determines that a size of capability information of the terminal device that needs to be reported is greater than a maximum size of a PDCP SDU, the terminal device 11 may transmit a first message including at least first information to the network-side device 12, where the first information includes information used for indicating that the size of the capability information of the terminal device is greater than the maximum size of the PDCP SDU. Optionally, the first information may further include at least one of the size of the capability information of the terminal device and information used for indicating that the terminal device supports radio resource control RRC message segmentation.

Optionally, when determining that the size of the capability information of the terminal device that needs to be reported is greater than the maximum size of the PDCP SDU, the terminal device 11 may alternatively transmit the capability information of the terminal device by using at least one PDCP SDU based on a reporting manner. Capability information carried by any one of the at least one PDCP SDU is partial capability information of the terminal device.

For example, if the reporting manner indicates to report all capability information of the terminal device in a radio resource control RRC message segmentation manner, the terminal device 11 may perform RRC message segmentation on the capability information of the terminal device for reporting. If the reporting manner indicates to report partial capability information of the terminal device, the terminal device 11 may directly report the partial capability information of the terminal device.

It should be noted that the reporting manner may be predefined by a protocol or configured by the network-side device.

Optionally, the network-side device 12 may transmit, to the terminal device 11, a second message including at least second information, where the second information is used to indicate the reporting manner.

Optionally, after receiving the first information, the network-side device 12 may transmit, to the terminal device 11 based on the first information, the second message including at least the second information.

For example, when the first information includes the information used for indicating that the terminal device supports radio resource control RRC message segmentation, the terminal device 11 is indicated to upload all the capability information of the terminal device in the RRC message segmentation manner. If the first information does not include the information used for indicating that the terminal device supports radio resource control RRC message segmentation, or includes information used for indicating that the terminal device does not support RRC message segmentation, the terminal device 11 is indicated to report the partial capability information.

After receiving the second message, the terminal device 11 may report the capability information based on the reporting manner indicated by the network-side device 12.

It should be noted that the first message and the second message may be existing messages in initial access and UE capability reporting processes in the related art, or may be additionally transmitted messages, which are not limited in this embodiment of this disclosure.

In this embodiment of this disclosure, the first message is transmitted to the network-side device when the size of the capability information of the terminal device is greater than the maximum size of the PDCP SDU, where the first message includes the first information, and the first information includes the information used for indicating that the size of the capability information of the terminal device is greater than the maximum size of the PDCP SDU, so that when the size of the capability information that needs to be reported by the UE exceeds the maximum size of the PDCP SDU, the network-side device is indicated that the size of the capability information of the terminal device is greater than the maximum size of the PDCP SDU, thereby standardizing the processing manner related to the capability information of the UE when the size of the capability information that needs to be reported by the UE exceeds the maximum size of the PDCP SDU.

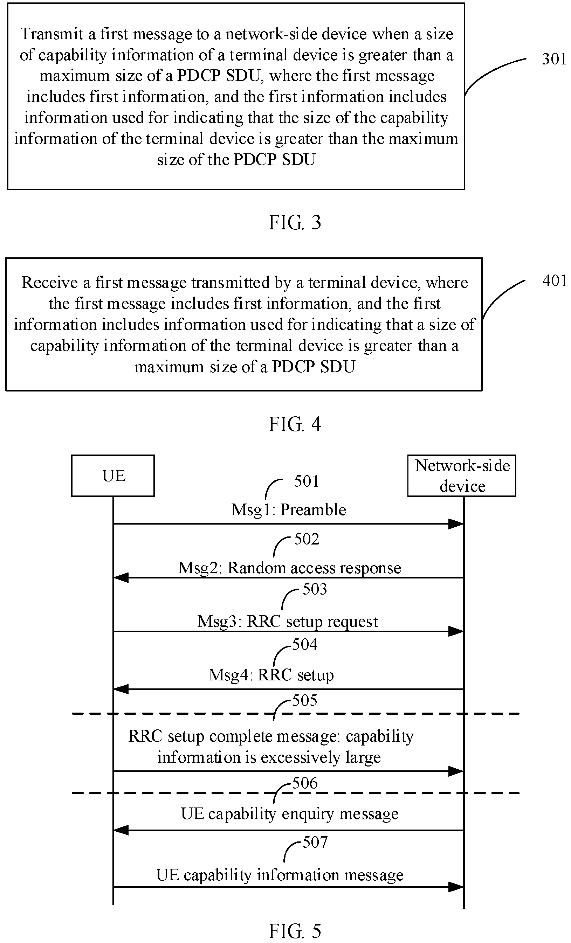

An embodiment of this disclosure provides a method for processing terminal device capability information, applied to a terminal device. Referring to FIG 3, FIG 3 is a flowchart of a method for processing terminal device capability information according to an embodiment of this disclosure. As shown in FIG 3, the method includes the following steps.

Step 301: Transmit a first message to a network-side device when a size of capability information of the terminal device is greater than a maximum size of a PDCP SDU.

The first message includes first information, and the first information includes information used for indicating that the size of the capability information of the terminal device is greater than the maximum size of the PDCP SDU.

In this embodiment of this disclosure, the information used for indicating that the size of the capability information of the terminal device is greater than the maximum size of the PDCP SDU may be information explicitly indicating that the size of the capability information of the terminal device is greater than the maximum size of the PDCP SDU, for example, using a preset indication bit to indicate that the size of the capability information of the terminal device is greater than the maximum size of the PDCP SDU. Alternatively, the information may be information implicitly indicating that the size of the capability information of the terminal device is greater than the maximum size of the PDCP SDU, for example, the size of the capability information of the terminal device, or a difference between the size of the capability information of the terminal device and the maximum size of the PDCP SDU. Upon receiving the information, the network-side device confirms that the size of the capability information of the terminal device is greater than the maximum size of the PDCP SDU.

Specifically, when the size of the capability information of the terminal device is greater than the maximum size of the PDCP SDU, the terminal device transmits, to the network-side device, the first message carrying the first information, where the first information includes at least the information used for indicating that the size of the capability information of the terminal device is greater than the maximum size of the PDCP SDU, so as to notify the network-side device that the size of the capability information of the terminal device is greater than the maximum size of the PDCP SDU, and to facilitate corresponding processing of the network-side device, for example, indicating a reporting manner of the capability information of the terminal device.

It should be noted that the first message may be an existing message in initial access and UE capability reporting processes in the related art, or may be an additionally transmitted message (namely, an auxiliary message), which is not limited in this embodiment of this disclosure.

Optionally, the first information may further include at least one of the following:
the size of the capability information of the terminal device; and
information used for indicating that the terminal device supports RRC message segmentation.

In this embodiment of this disclosure, the size of the capability information of the terminal device may be a size of total capability information that needs to be reported by the terminal device.

Optionally, the network-side device may configure, based on the first information, a manner of reporting the capability information by the terminal device. For example, when the first information includes the size of the capability information of the terminal device, the network-side device may configure an RRC message segmentation parameter such as a segment length based on the size of the capability information of the terminal device. When the first information includes the information used for indicating that the terminal device supports RRC message segmentation, the terminal device is indicated to report the capability information of the terminal device in an RRC message segmentation manner.

According to the method for processing terminal device capability information provided in this embodiment of this disclosure, the first message is transmitted to the network-side device when the size of the capability information of the terminal device is greater than the maximum size of the PDCP SDU, where the first message includes the first information, and the first information includes the information used for indicating that the size of the capability information of the terminal device is greater than the maximum size of the PDCP SDU, so that when the size of the capability information that needs to be reported by the UE exceeds the maximum size of the PDCP SDU, the network-side device is indicated that the size of the capability information of the terminal device is greater than the maximum size of the PDCP SDU, thereby facilitating corresponding processing of the network-side device, and standardizing the processing manner of the capability information of the UE when the size of the capability information that needs to be reported by the UE exceeds the maximum size of the PDCP SDU.

Optionally, the method may further include:
transmitting the capability information of the terminal device by using at least one PDCP SDU based on a reporting manner.

Capability information carried by any one of the at least one PDCP SDU is partial capability information of the terminal device.

In this embodiment of this disclosure, when the size of the capability information of the terminal device is greater than the maximum size of the PDCP SDU, all the capability information of the terminal device cannot be transmitted by using one PDCP SDU. In this case, the capability information of the terminal device may be transmitted by using at least one PDCP SDU based on the reporting manner, where the capability information carried by any one of the at least one PDCP SDU is partial capability information of the terminal device, so as to ensure that the capability information of the terminal device can still be reported when the size of the capability information of the terminal device is greater than the maximum size of the PDCP SDU.

For example, if the reporting manner indicates to report all the capability information of the terminal device in the radio resource control (Radio Resource Control, RRC) message segmentation manner, the terminal device may perform RRC message segmentation on the capability information of the terminal device and then report the capability information of the terminal device. If the reporting manner indicates to report the partial capability information of the terminal device, the terminal device may directly report the partial capability information of the terminal device.

Optionally, the reporting manner may be predefined by a protocol or configured by the network side.

It should be noted that the reporting manner of the capability information of the terminal device when the size of the capability information of the terminal device is less than or equal to the maximum size of the PDCP SDU is not limited in this embodiment of this disclosure. For example, the capability information of the terminal device may be reported in a terminal device capability reporting manner in the related art.

It should be noted that the capability information of the terminal device may be capability information that needs to be reported by the terminal device. The partial capability information of the terminal device may be partial capability information in the capability information that needs to be reported by the terminal device. All the capability information of the terminal device may be all capability information in the capability information that needs to be reported by the terminal device.

In this embodiment of this disclosure, when the size of the capability information of the terminal device is greater than the maximum size of the PDCP SDU, the capability information of the terminal device is transmitted by using the at least one PDCP SDU based on the reporting manner, where the capability information carried in any one of the at least one PDCP SDU is the partial capability information of the terminal device. In this way, the capability information of the UE can be reported when the size of the capability information to be reported by the UE exceeds the maximum size of the PDCP SDU, thereby ensuring that the capability information of the terminal device can still be reported when the size of the capability information of the terminal device is greater than the maximum size of the PDCP SDU, and further improving flexibility in reporting the capability information of the UE.

Optionally, the reporting manner may include:
reporting all capability information of the terminal device in a radio resource control RRC message segmentation manner; or
reporting partial capability information of the terminal device.

In this embodiment of this disclosure, the reporting all the capability information of the terminal device in the radio resource control RRC message segmentation manner may be performing RRC message segmentation on all the capability information of the terminal device and transmitting each segment by using one PDCP SDU, that is, transmitting partial capability information of the terminal device in each PDCP SDU.

In this embodiment of this disclosure, all the capability information of the terminal device is reported in the radio resource control RRC message segmentation manner when the size of the capability information of the terminal device is greater than the maximum size of the PDCP SDU, thereby ensuring integrity of the reported capability information of the terminal device, and facilitating more accurate resource configuration based on the capability information of the terminal device by the network-side device.

The reported partial capability information of the terminal device is also a part of the capability information of the terminal device. For example, a part of the capability information whose size is less than or equal to the maximum size of the PDCP SDU may be obtained from the capability information of the terminal device for reporting. It should be noted that in this embodiment of this disclosure, the partial capability information may be randomly obtained from the capability information of the terminal device for reporting; or the partial capability information may be selected based on an indication of the network-side device from the capability information of the terminal device for reporting; or the like. This is not limited in this embodiment of this disclosure.

In this embodiment of this disclosure, reporting the partial capability information of the terminal device when the size of the capability information of the terminal device is greater than the maximum size of the PDCP SDU can improve the efficiency of capability information reporting.

Optionally, before the transmitting the capability information of the terminal device by using the at least one PDCP SDU based on the reporting manner, the method further includes:
receiving a second message transmitted by the network-side device, where the second message includes second information, and the second information is used to indicate the reporting manner.

In this embodiment of this disclosure, after receiving the first message, the network-side device may transmit, to the terminal device, a second message carrying at least second information, where the second information is used to indicate the reporting manner.

It should be noted that when the reporting manner is using the RRC message segmentation manner to report all the capability information of the terminal device, the second information may further include an RRC message segmentation configuration parameter, for example, information such as a segment number and a segment length. When the reporting manner is reporting the partial capability information of the terminal device, the second information may further include indication information used for indicating the partial capability information that needs to be reported.

It should be noted that the second message may be an existing message in initial access and UE capability reporting processes in the related art, or may be an additionally transmitted message, which is not limited in this embodiment of this disclosure.

In this embodiment of this disclosure, the reporting manner is indicated by the network-side device, thereby improving the flexibility of controlling capability information reporting of the terminal device.

Optionally, the second message further carries capability request information.

In this embodiment of this disclosure, the second message further carries the capability request information, for example, the second message is a UECapabilityEnquiry message shown in FIG 1

In this embodiment of this disclosure, the second information is transmitted by using an existing message in the initial access and UE capability reporting processes in the related art, thereby saving signaling overheads.

Optionally, the first message is a connection configuration complete message; or
the first message is a message that is transmitted in response to capability request information transmitted by the network-side device; or
the first message is an auxiliary message transmitted by the terminal device to the network-side device.

In this embodiment of this disclosure, the first message may be a connection configuration complete message, such as an RRCSetupComplete message shown in FIG 1. The first message may alternatively be a message transmitted in response to the capability request information transmitted by the network-side device, for example, a UECapabilityInformation message shown in FIG 1.

In this embodiment of this disclosure, the first information is transmitted by using an existing message in the initial access and UE capability reporting processes in the related art, thereby saving signaling overheads.

Optionally, the first message may alternatively be an auxiliary message transmitted by the terminal device to the network-side device, that is, a message additionally transmitted relative to the existing message. In this embodiment of this disclosure, the first information is carried in the auxiliary message, thereby improving the flexibility of transmitting the first information.

Optionally, when the first message is a message that is transmitted in response to the capability request information transmitted by the network-side device, the first message further carries the partial capability information of the terminal device.

In this embodiment of this disclosure, when receiving the capability request information transmitted by the network-side device, the terminal device may transmit the first information and the partial capability information of the terminal device to the network-side device, thereby improving the efficiency of capability information reporting.

For example, referring to FIG 1, when the UECapabilityEnquiry message transmitted by the network-side device is received, a UECapabilityInformation message is transmitted to the network-side device, where the UECapabilityInformation message carries the first information and the partial capability information of the terminal device.

Optionally, when the first message also carries the partial capability information of the terminal device, the first information may further include at least one of the following:
the size of the capability information of the terminal device;
information used for indicating that the terminal device supports radio resource control RRC message segmentation;
information used for indicating that the terminal device has remaining capability information that has not been reported; and
a size of the remaining capability information, where the remaining capability information is capability information other than the reported capability information in the capability information of the terminal device.

In this embodiment of this disclosure, the size of the capability information of the terminal device may be a size of total capability information that needs to be reported by the terminal device. The size of the remaining capability information is also a difference between the size of all the capability information that needs to be reported by the terminal device and a size of already-reported capability information. For example, if the size of the total capability information is 10000 bytes and the UE has reported 9000-byte capability information, the remaining 1000-byte capability information has not been reported by the UE.

It should be noted that when the first message further carries the partial capability information of the terminal device, the reporting the partial capability information of the terminal device may be reporting the remaining capability information of the terminal device, where the remaining capability information is capability information other than the already-reported capability information in the capability information of the terminal device. The reporting all the capability information of the terminal device in the RRC message segmentation manner may be performing RRC message segmentation on the remaining capability information of the terminal device for uploading.

An embodiment of this disclosure provides a method for processing terminal device capability information, applied to a network-side device. Referring to FIG 4, FIG 4 is a flowchart of another method for processing terminal device capability information according to an embodiment of this disclosure. As shown in FIG 4, the method includes the following steps.

Step 401: Receive a first message transmitted by a terminal device.

The first message includes first information, and the first information includes information used for indicating that a size of capability information of the terminal device is greater than a maximum size of a PDCP SDU.

In this embodiment of this disclosure, the information used for indicating that the size of the capability information of the terminal device is greater than the maximum size of the PDCP SDU may be information explicitly indicating that the size of the capability information of the terminal device is greater than the maximum size of the PDCP SDU, for example, using a preset indication bit to indicate that the size of the capability information of the terminal device is greater than the maximum size of the PDCP SDU. Alternatively, the information may be information implicitly indicating that the size of the capability information of the terminal device is greater than the maximum size of the PDCP SDU, for example, the size of the capability information of the terminal device, or a difference between the size of the capability information of the terminal device and the maximum size of the PDCP SDU. Upon receiving the information, the network-side device confirms that the size of the capability information of the terminal device is greater than the maximum size of the PDCP SDU.

Specifically, when the size of the capability information of the terminal device is greater than the maximum size of the PDCP SDU, the terminal device may transmit, to the network-side device, the first message carrying the first information, where the first information includes at least the information used for indicating that the size of the capability information of the terminal device is greater than the maximum size of the PDCP SDU, so as to notify the network-side device that the size of the capability information of the terminal device is greater than the maximum size of the PDCP SDU, and to facilitate corresponding processing of the network-side device, for example, indicating a reporting manner of the capability information of the terminal device.

It should be noted that the first message may be an existing message in initial access and UE capability reporting processes in the related art, or may be an additionally transmitted message (namely, an auxiliary message), which is not limited in this embodiment of this disclosure.

Optionally, the first information may further include at least one of the following:
the size of the capability information of the terminal device; and
information used for indicating that the terminal device supports RRC message segmentation.

In this embodiment of this disclosure, the size of the capability information of the terminal device may be a size of total capability information that needs to be reported by the terminal device.

Optionally, the network-side device may configure, based on the first information, a manner of reporting the capability information by the terminal device. For example, when the first information includes the size of the capability information of the terminal device, the network-side device may configure an RRC message segmentation parameter such as a segment length based on the size of the capability information of the terminal device. When the first information includes the information used for indicating that the terminal device supports RRC message segmentation, the terminal device is indicated to report the capability information of the terminal device in an RRC message segmentation manner.

According to the method for processing terminal device capability information provided in this embodiment of this disclosure, the first message transmitted by the terminal device is received, where the first message includes the first information, and the first information includes the information used for indicating that the size of the capability information of the terminal device is greater than the maximum size of the PDCP SDU, so that when the size of the capability information that needs to be reported by the UE exceeds the maximum size of the PDCP SDU, the network-side device is indicated that the size of the capability information of the terminal device is greater than the maximum size of the PDCP SDU, thereby facilitating corresponding processing of the network-side device, and standardizing the processing manner of the capability information of the UE when the size of the capability information that needs to be reported by the UE exceeds the maximum size of the PDCP SDU.

Optionally, the method may further include:
receiving capability information of the terminal device that is transmitted by the terminal device by using at least one PDCP SDU based on a reporting manner.

Capability information carried by any one of the at least one PDCP SDU is partial capability information of the terminal device.

In this embodiment of this disclosure, the network-side device may receive the capability information of the terminal device that is transmitted by the terminal device by using at least one PDCP SDU based on the reporting manner, where the capability information carried by any one of the at least one PDCP SDU is partial capability information of the terminal device, so as to ensure that the capability information of the terminal device can still be reported when the size of the capability information of the terminal device is greater than the maximum size of the PDCP SDU.

For example, if the reporting manner indicates to report all the capability information of the terminal device in the RRC message segmentation manner, RRC message segmentation may be performed on the capability information of the terminal device for reporting. If the reporting manner indicates to report partial capability information of the terminal device, the partial capability information of the terminal device may be directly reported.

Optionally, the reporting manner may be predefined by a protocol or configured by the network side.

It should be noted that the capability information of the terminal device may be capability information that needs to be reported by the terminal device. The partial capability information of the terminal device may be partial capability information in the capability information that needs to be reported by the terminal device. All the capability information of the terminal device may be all capability information in the capability information that needs to be reported by the terminal device.

In this embodiment of this disclosure, the capability information of the terminal device that is transmitted by the terminal device by using the at least one PDCP SDU based on the reporting manner is received, where the capability information carried in any one of the at least one PDCP SDU is the partial capability information of the terminal device. In this way, the capability information of the UE can be transmitted when the capability information that needs to be reported by the UE exceeds the maximum size of the PDCP SDU, thereby improving flexibility of UE capability information transmission.

Optionally, the reporting manner includes:
reporting all capability information of the terminal device in a radio resource control RRC message segmentation manner; or
reporting partial capability information of the terminal device.

In this embodiment of this disclosure, the reporting all the capability information of the terminal device in the radio resource control RRC message segmentation manner may be performing RRC message segmentation on all the capability information of the terminal device and transmitting each segment by using one PDCP SDU, that is, transmitting partial capability information of the terminal device in each PDCP SDU.

In this embodiment of this disclosure, all the capability information of the terminal device is reported in the radio resource control RRC message segmentation manner when the size of the capability information of the terminal device is greater than the maximum size of the PDCP SDU, thereby ensuring integrity of the reported capability information of the terminal device, and facilitating more accurate resource configuration based on the capability information of the terminal device by the network-side device.

The reported partial capability information of the terminal device is also a part of the capability information of the terminal device. For example, a part of the capability information whose size is less than or equal to the maximum size of the PDCP SDU may be obtained from the capability information of the terminal device for reporting. It should be noted that in this embodiment of this disclosure, the partial capability information may be randomly obtained from the capability information of the terminal device for reporting; or the partial capability information may be selected based on an indication of the network-side device from the capability information of the terminal device for reporting; or the like. This is not limited in this embodiment of this disclosure.

In this embodiment of this disclosure, reporting the partial capability information of the terminal device when the size of the capability information of the terminal device is greater than the maximum size of the PDCP SDU can improve the efficiency of capability information reporting.

Optionally, before the receiving the capability information of the terminal device that is transmitted by the terminal device by using the at least one PDCP SDU based on the reporting manner, the method further includes:
transmitting a second message to the terminal device, where the second message includes second information, and the second information is used to indicate the reporting manner.

In this embodiment of this disclosure, after receiving the first message, the network-side device may transmit, to the terminal device, a second message carrying at least second information, where the second information is used to indicate the reporting manner.

It should be noted that when the reporting manner is using the RRC message segmentation manner to report all the capability information of the terminal device, the second information may further include an RRC message segmentation configuration parameter, for example, information such as a segment number and a segment length. When the reporting manner is reporting the partial capability information of the terminal device, the second information may further include indication information used for indicating the partial capability information that needs to be reported.

It should be noted that the second message may be an existing message in initial access and UE capability reporting processes in the related art, or may be an additionally transmitted message, which is not limited in this embodiment of this disclosure.

In this embodiment of this disclosure, the reporting manner is indicated by the network-side device, thereby improving the flexibility of controlling capability information reporting of the terminal device.

Optionally, the second message further carries capability request information.

In this embodiment of this disclosure, the second message further carries the capability request information, for example, the second message is a UECapabilityEnquiry message shown in FIG 1

In this embodiment of this disclosure, the second information is transmitted by using an existing message in the initial access and UE capability reporting processes in the related art, thereby saving signaling overheads.

Optionally, the first message is a connection configuration complete message; or
the first message is an auxiliary message transmitted by the terminal device to the network-side device.

In this embodiment of this disclosure, the first message may be a connection configuration complete message, such as an RRCSetupComplete message shown in FIG 1.

In this embodiment of this disclosure, the first information is transmitted by using an existing message in the initial access and UE capability reporting processes in the related art, thereby saving signaling overheads.

Optionally, the first message may alternatively be an auxiliary message transmitted by the terminal device to the network-side device, that is, a message additionally transmitted relative to the existing message. In this embodiment of this disclosure, the first information is carried in the auxiliary message, thereby improving the flexibility of transmitting the first information.

Optionally, before the receiving the first message transmitted by the terminal device, the method further includes:
transmitting capability request information to the terminal device.

The first message is a message transmitted in response to the capability request information.

In this embodiment of this disclosure, the first message may be a message transmitted in response to the capability request information transmitted by the network-side device, for example, a UECapabilityInformation message shown in FIG 1.

In this embodiment of this disclosure, the first information is transmitted by using an existing message in the initial access and UE capability reporting processes in the related art, thereby saving signaling overheads.

Optionally, the first message further carries partial capability information of the terminal device.

In this embodiment of this disclosure, when receiving the capability request information transmitted by the network-side device, the terminal device may transmit the first information and the partial capability information of the terminal device to the network-side device, thereby improving the efficiency of capability information reporting.

For example, referring to FIG 1, when the UECapabilityEnquiry message transmitted by the network-side device is received, a UECapabilityInformation message is transmitted to the network-side device, where the UECapabilityInformation message carries the first information and the partial capability information of the terminal device.

Optionally, when the first message also carries the partial capability information of the terminal device, the first information includes at least one of the following:
the size of the capability information of the terminal device;
information used for indicating that the terminal device supports radio resource control RRC message segmentation;
information used for indicating that the terminal device has remaining capability information that has not been reported; and
a size of the remaining capability information, where the remaining capability information is capability information other than the reported capability information in the capability information of the terminal device.

In this embodiment of this disclosure, the size of the capability information of the terminal device may be a size of total capability information that needs to be reported by the terminal device. The size of the remaining capability information is also a difference between the size of all the capability information that needs to be reported by the terminal device and a size of already-reported capability information. For example, if the size of the total capability information is 10000 bytes and the UE has reported 9000-byte capability information, the remaining 1000-byte capability information has not been reported by the UE.

It should be noted that when the first message further carries the partial capability information of the terminal device, the reporting the partial capability information of the terminal device may be reporting the remaining capability information of the terminal device, where the remaining capability information is capability information other than the already-reported capability information in the capability information of the terminal device. The reporting all the capability information of the terminal device in the RRC message segmentation manner may be performing RRC message segmentation on the remaining capability information of the terminal device for uploading.

The following uses specific examples to describe the method for processing terminal device capability information provided in this embodiment of this disclosure.

Example 1: Indication information that the capability information is excessively large is reported by using a connection configuration completion message.

Referring to FIG 5, the method for processing terminal device capability information provided in this embodiment of this disclosure includes the following steps:
Step 501: UE initiates a connection establishment process, initiates a random access process, and transmits an Msg1, where the Msg1 carries a preamble (namely, preamble).
Step 502: A network-side device transmits, based on the Msg1 transmitted by the UE, an Msg2 carrying a random access response (namely, RAR), where the Msg2 further carries an uplink resource used for transmitting an Msg3.
Step 503: The UE transmits the Msg3 based on the resource allocated in the Msg2.

This step is the same as the foregoing step 103.

Step 504: The network-side device transmits an Msg4 of the random access process to the UE based on the Msg3 transmitted by the UE.

This step is the same as the foregoing step 104.

Step 505: If a size of capability information of the UE exceeds a maximum size of a PDCP SDU, the UE indicates, by using a connection configuration complete message, related information that the size of the capability information of the UE exceeds the maximum size of the PDCP SDU.

In this step, the related information that the size of the capability information of the UE exceeds the maximum size of the PDCP SDU is the foregoing first information.

Step 506: The network-side device transmits capability request information to the UE.

Correspondingly, before or when requesting the UE to report the capability information, the network-side device may configure an RRC message segmentation function for the UE based on the indication information in step 505, so as to indicate the UE to report all the capability information of the terminal device in an RRC message segmentation manner. If the size of the capability information of the UE exceeds the maximum size of the PDCP SDU, during reporting of the capability information of the UE, the UE performs RRC message segmentation on the capability information of the UE for reporting.

Alternatively, the network-side device may request, based on the indication information in step 505, the UE to report partial capability information, and a size of the partial capability information that the UE is requested to report is less than or equal to the maximum size of the PDCP SDU.

Step 507: The UE reports capability information of the UE to the network side based on the request information of the network side.

In this step, the UE reports the capability information of the UE to the network side based on the request information of the network side and the reporting manner.

Example 2: Indication information that the capability information is excessively large is reported by using a UE capability information message.

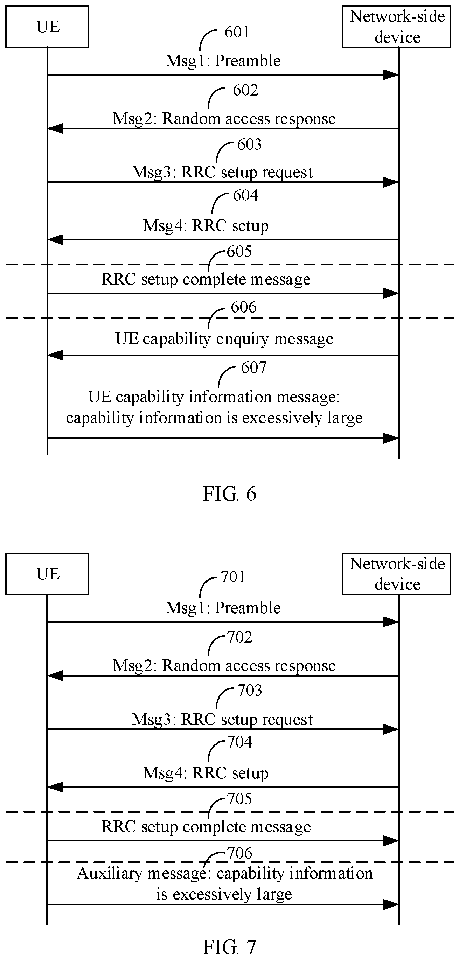

Referring to FIG 6, the method for processing terminal device capability information provided in this embodiment of this disclosure includes the following steps.

Step 601: UE initiates a connection establishment process, initiates a random access process, and transmits an Msg1, where the Msg1 carries a preamble (namely, preamble).

Step 602: A network-side device transmits, based on the Msg1 transmitted by the UE, an Msg2 carrying a random access response (namely, RAR), where the Msg2 further carries an uplink resource used for transmitting an Msg3.

Step 603: The UE transmits the Msg3 based on the resource allocated in the Msg2.

This step is the same as the foregoing step 103.

Step 604: The network-side device transmits an Msg4 of the random access process to the UE based on the Msg3 transmitted by the UE.

This step is the same as the foregoing step 104.

Step 605: After executing a connection configuration message delivered by the network-side device, the UE feeds back a connection configuration complete message to the network side.

This step is the same as the foregoing step 105.

Step 606: The network-side device transmits capability request information to the UE.

This step is the same as the foregoing step 106.

Step 607: When the UE receives the capability request information from the network side, if a size of capability information of the UE exceeds a maximum size of a PDCP SDU, the UE does not report the capability information of the UE, but indicates, to the network side, related information that the size of the capability information on the UE exceeds the maximum size of the PDCP SDU.

In this step, the related information that the size of the capability information of the UE exceeds the maximum size of the PDCP SDU is the foregoing first information.

Correspondingly, the network-side device may configure an RRC message segmentation function for the UE based on the indication information in step 607, so as to indicate the UE to report all the capability information of the terminal device in an RRC message segmentation manner. If the size of the capability information of the UE exceeds the maximum size of the PDCP SDU, during reporting of the capability information of the UE, the UE performs RRC message segmentation on the capability information of the UE for reporting.

Alternatively, the network-side device may request, based on the indication information in step 605, the UE to report partial capability information, and a size of the partial capability information that the UE is requested to report is less than or equal to the maximum size of the PDCP SDU.

Optionally, the foregoing step 607 may alternatively be: When the UE receives the capability request information from the network side, if the size of the capability information of the UE exceeds the maximum size of the PDCP SDU, the UE may report the partial capability information of the UE and indicates, to the network side, related information that the size of the capability information on the UE exceeds the maximum size of the PDCP SDU.

Correspondingly, the related information that the size of the capability information of the UE exceeds the maximum size of the PDCP SDU may include at least one of the following:
indication information that the size of the capability information exceeds the maximum size of the PDCP SDU;
a total size of the capability information, for example, 10000 bytes;
indication information that there is remaining capability information that has not been reported;
a size of the remaining capability information that has not been reported, for example, if the UE has reported 9000-byte capability information and the size of the total capability information is 10000 bytes, the remaining 1000-byte capability information has not been reported by the UE; and
indication information that the RRC message segmentation function is supported.

Specifically, based on the indication information in step 607, the network side may configure the RRC message segmentation function for the UE. If the size of the capability information of the UE exceeds the maximum size of the PDCP SDU, during UE capability reporting, the UE performs RRC message segmentation on the capability information of the UE for reporting.

Alternatively, based on the indication information in step 607, the network side may request the UE to report the remaining capability information to the UE. For example, the network side indicates the UE by using the capability request information to report the remaining UE capability information, and the UE reports the remaining UE capability information to the network side after receiving the request information from the network side. If the size of the remaining capability information size of the UE still exceeds the maximum size of the PDCP SDU, the UE may continue to indicate related information that the size of the capability information exceeds the maximum size of the PDCP SDU.

Example 3: Indication information that the capability information is excessively large is reported by using an auxiliary message.

Referring to FIG 7, the method for processing terminal device capability information provided in this embodiment of this disclosure includes the following steps.

Step 701: UE initiates a connection establishment process, initiates a random access process, and transmits an Msg1, where the Msg1 carries a preamble (namely, preamble).

Step 702: A network-side device transmits, based on the Msg1 transmitted by the UE, an Msg2 carrying a random access response (namely, RAR), where the Msg2 further carries an uplink resource used for transmitting an Msg3.

Step 703: The UE transmits the Msg3 based on the resource allocated in the Msg2.

This step is the same as the foregoing step 103.

Step 704: The network-side device transmits an Msg4 of the random access process to the UE based on the Msg3 transmitted by the UE.

This step is the same as the foregoing step 104.

Step 705: After executing a connection configuration message delivered by the network-side device, the UE feeds back a connection configuration complete message to the network side.

This step is the same as the foregoing step 105.

Step 706: If a size of capability information of the UE exceeds a maximum size of a PDCP SDU, the UE reports an auxiliary message to the network side to indicate related information that the size of the capability information of the UE exceeds the maximum size of the PDCP SDU.

Correspondingly, before or when requesting the UE to report the capability information, the network-side device may configure an RRC message segmentation function for the UE based on the indication information in step 706. If the size of the capability information of the UE exceeds the maximum size of the PDCP SDU, during UE capability reporting, the UE performs RRC message segmentation on the capability information of the UE for reporting.

Alternatively, the network-side device may request, based on the indication information in step 706, the UE to report partial capability information, and a size of the partial capability information that the UE is requested to report is less than or equal to the maximum size of the PDCP SDU.

According to the method for processing terminal device capability information provided in this embodiment of this disclosure, through negotiation between the UE and the network side, the UE may report the capability information of the UE to the network side when the size of the capability information to be reported by the UE exceeds the maximum size of the PDCP SDU.

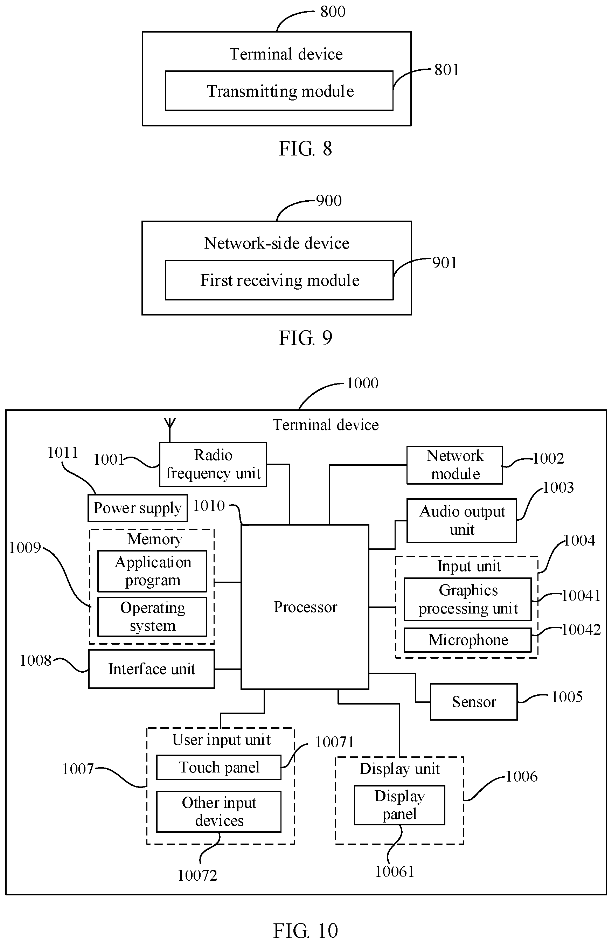

Referring to FIG 8, FIG. 8 is a structural diagram of a terminal device according to an embodiment of this disclosure. As shown in FIG 8, the terminal device 800 includes:
a transmitting module 800, configured to transmit a first message to a network-side device when a size of capability information of the terminal device is greater than a maximum size of a PDCP SDU.

The first message includes first information, and the first information includes information used for indicating that the size of the capability information of the terminal device is greater than the maximum size of the PDCP SDU.

Optionally, the terminal device further includes:
a transmitting module, configured to transmit the capability information of the terminal device by using at least one PDCP SDU based on a reporting manner.

Capability information carried by any one of the at least one PDCP SDU is partial capability information of the terminal device.

Optionally, the reporting manner includes:
reporting all capability information of the terminal device in a radio resource control RRC message segmentation manner; or
reporting partial capability information of the terminal device.

Optionally, the terminal device further includes:
a receiving module, configured to: before the capability information of the terminal device is transmitted by using the at least one PDCP SDU based on the reporting manner, receive a second message transmitted by the network-side device, where the second message includes second information, and the second information is used to indicate the reporting manner.

Optionally, the first message is a connection configuration complete message; or
the first message is a message that is transmitted in response to capability request information transmitted by the network-side device; or
the first message is an auxiliary message transmitted by the terminal device to the network-side device.

Optionally, when the first message is a message that is transmitted in response to the capability request information transmitted by the network-side device, the first message further carries the partial capability information of the terminal device.

Optionally, the first information further includes at least one of the following:
the size of the capability information of the terminal device;
information used for indicating that the terminal device supports radio resource control RRC message segmentation;
information used for indicating that the terminal device has remaining capability information that has not been reported; and
a size of the remaining capability information, where the remaining capability information is capability information other than the reported capability information in the capability information of the terminal device.

Optionally, the first information further includes at least one of the following:
the size of the capability information of the terminal device; and
information used for indicating that the terminal device supports RRC message segmentation.

Optionally, the second message further carries capability request information.

The terminal device 800 provided in this embodiment of this disclosure is capable of implementing various processes implemented by the terminal device in the method embodiments of FIG 3 to FIG 7. To avoid repetition, details are not described herein again.

According to the terminal device 800 provided in this embodiment of this disclosure, the transmitting module 800 is configured to transmit the first message to the network-side device when the size of the capability information of the terminal device is greater than the maximum size of the PDCP SDU, where the first message includes the first information, and the first information includes the information used for indicating that the size of the capability information of the terminal device is greater than the maximum size of the PDCP SDU, so that when the size of the capability information that needs to be reported by the UE exceeds the maximum size of the PDCP SDU, the network-side device is indicated that the size of the capability information of the terminal device is greater than the maximum size of the PDCP SDU, thereby standardizing the processing manner related to the capability information of the UE when the size of the capability information that needs to be reported by the UE exceeds the maximum size of the PDCP SDU.

Referring to FIG 9, FIG 9 is a structural diagram of a network-side device according to an embodiment of this disclosure. As shown in FIG 9, the network-side device 900 includes:
a first receiving module 901, configured to receive a first message transmitted by a terminal device.

The first message includes first information, and the first information includes information used for indicating that a size of capability information of the terminal device is greater than a maximum size of a PDCP SDU.

Optionally, the network-side device further includes:
a second receiving module, configured to receive capability information of the terminal device that is transmitted by the terminal device by using at least one PDCP SDU based on a reporting manner.

Capability information carried by any one of the at least one PDCP SDU is partial capability information of the terminal device.

Optionally, the reporting manner includes:
reporting all capability information of the terminal device in a radio resource control RRC message segmentation manner; or
reporting partial capability information of the terminal device.

Optionally, the network-side device further includes:
a first transmitting module, configured to transmit a second message to the terminal device, where the second message includes second information, and the second information is used to indicate the reporting manner.

Optionally, the first message is a connection configuration complete message; or
the first message is an auxiliary message transmitted by the terminal device to the network-side device.

Optionally, the network-side device further includes:
a second transmitting module, configured to transmit capability request information to the terminal device before the first message transmitted by the terminal device is received.

The first message is a message transmitted in response to the capability request information.

Optionally, the first message further carries partial capability information of the terminal device.

Optionally, the first information further includes at least one of the following:
the size of the capability information of the terminal device;
information used for indicating that the terminal device supports radio resource control RRC message segmentation;
information used for indicating that the terminal device has remaining capability information that has not been reported; and
a size of the remaining capability information, where the remaining capability information is capability information other than the reported capability information in the capability information of the terminal device.

Optionally, the first information further includes at least one of the following:
the size of the capability information of the terminal device; and
information used for indicating that the terminal device supports radio resource control RRC message segmentation.

Optionally, the second message further carries capability request information.

The network-side device 900 provided in this embodiment of this disclosure is capable of implementing various processes implemented by the network-side device in the method embodiments of FIG 3 to FIG 7. To avoid repetition, details are not described herein again.

According to the network-side device 900 provided in this embodiment of this disclosure, the first receiving module 901 is configured to receive the first message that is transmitted by the terminal device, where the first message includes the first information, and the first information includes the information used for indicating that the size of the capability information of the terminal device is greater than the maximum size of the PDCP SDU, so that when the size of the capability information that needs to be reported by the UE exceeds the maximum size of the PDCP SDU, the network-side device is indicated that the size of the capability information of the terminal device is greater than the maximum size of the PDCP SDU, thereby standardizing the processing manner related to the capability information of the UE when the size of the capability information that needs to be reported by the UE exceeds the maximum size of the PDCP SDU.

FIG 10 is a structural diagram of another terminal device according to an embodiment of this disclosure. Referring to FIG 10, the terminal device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, a processor 1010, and a power supply 1011. Persons skilled in the art can understand that a structure of the terminal device shown in FIG 10 does not constitute any limitation on the terminal device, and the terminal device may include more or fewer components than those shown in the figure, or a combination of some components, or the components disposed differently. In this embodiment of this disclosure, the terminal device includes but is not limited to a mobile phone, a tablet computer, a laptop computer, a palmtop computer, an in-vehicle terminal, a wearable device, a pedometer, and the like.

The radio frequency unit 1001 is configured to transmit a first message to a network-side device when a size of capability information of the terminal device is greater than a maximum size of a PDCP SDU, where the first message includes first information, and the first information includes information used for indicating that the size of the capability information of the terminal device is greater than the maximum size of the PDCP SDU.

In this embodiment of this disclosure, when the size of the capability information that needs to be reported by the UE exceeds the maximum size of the PDCP SDU, the network-side device is indicated that the size of the capability information of the terminal device is greater than the maximum size of the PDCP SDU, thereby standardizing the processing manner related to the capability information of the UE when the size of the capability information that needs to be reported by the UE exceeds the maximum size of the PDCP SDU.

Optionally, the radio frequency unit 1001 is further configured to:
transmit the capability information of the terminal device by using at least one PDCP SDU based on a reporting manner.

Capability information carried by any one of the at least one PDCP SDU is partial capability information of the terminal device.

Optionally, the reporting manner includes:
reporting all capability information of the terminal device in a radio resource control RRC message segmentation manner; or
reporting partial capability information of the terminal device.

Optionally, the radio frequency unit 1001 is further configured to:
before the capability information of the terminal device is transmitted by using the at least one PDCP SDU based on the reporting manner, receive a second message transmitted by the network-side device, where the second message includes second information, and the second information is used to indicate the reporting manner.

Optionally, the first message is a connection configuration complete message; or
the first message is a message that is transmitted in response to capability request information transmitted by the network-side device; or
the first message is an auxiliary message transmitted by the terminal device to the network-side device.

Optionally, when the first message is a message that is transmitted in response to the capability request information transmitted by the network-side device, the first message further carries the partial capability information of the terminal device.

Optionally, the first information further includes at least one of the following:
the size of the capability information of the terminal device;
information used for indicating that the terminal device supports radio resource control RRC message segmentation;
information used for indicating that the terminal device has remaining capability information that has not been reported; and
a size of the remaining capability information, where the remaining capability information is capability information other than the reported capability information in the capability information of the terminal device.

Optionally, the first information further includes at least one of the following:
the size of the capability information of the terminal device; and
information used for indicating that the terminal device supports RRC message segmentation.

Optionally, the second message further carries capability request information.

It should be understood that in this embodiment of this disclosure, the radio frequency unit 1001 may be configured to: receive and transmit signals in an information receiving/sending process or a call process; and specifically, after receiving downlink data from a base station, send the downlink information to the processor 1010 for processing, and in addition, send uplink data to the base station. Generally, the radio frequency unit 1001 includes but is not limited to an antenna, at least one amplifier, a transceiver, a coupler, a low noise amplifier, a duplexer, and the like. In addition, the radio frequency unit 1001 may also communicate with a network and other devices via a wireless communications system.

The terminal device provides a user with wireless broadband internet access through the network module 1002, for example, helping the user to transmit or receive an e-mail, to browse a web page, or to access streaming media.

The audio output unit 1003 may convert audio data received by the radio frequency unit 1001 or the network module 1002 or stored in the memory 1009 into an audio signal and output the audio signal as a sound. Furthermore, the audio output unit 1003 may also provide audio output (for example, a call signal received sound or a message received sound) related to a specific function performed by the terminal device 1000. The audio output unit 1003 includes a speaker, a buzzer, a receiver, and the like.

The input unit 1004 is configured to receive an audio or video signal. The input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. A processed image frame may be displayed on the display unit 1006. The image frame processed by the graphics processing unit 10041 may be stored in the memory 1009 (or another storage medium) or be sent by the radio frequency unit 1001 or the network module 1002. The microphone 10042 is capable of receiving sounds and processing such sounds into audio data. The processed audio data may be converted in a telephone call mode into a format that can be transmitted by the radio frequency unit 1001 to a mobile communications base station, for outputting.

The terminal device 1000 may further include at least one sensor 1005, for example, an optical sensor, a motion sensor, and other sensors. Specifically, the optical sensor may include an ambient light sensor and a proximity sensor. The ambient light sensor may adjust luminance of the display panel 10061 based on brightness of ambient light, and the proximity sensor may turn off the display panel 10061 and/or backlight when the terminal device 1000 moves close to an ear. As a type of motion sensor, an accelerometer sensor can detect magnitudes of accelerations in all directions (usually three axes), can detect a magnitude and a direction of gravity when the mobile phone is in a static state, and can be applied to posture recognition (such as screen switching between portrait and landscape, related games, and magnetometer posture calibration) of the terminal device, functions related to vibration recognition (such as pedometer and tapping), and the like. The sensor 1005 may also include a fingerprint sensor, a pressure sensor, an iris sensor, a molecular sensor, a gyroscope, a barometer, a hygrometer, a thermometer, an infrared sensor, and the like. Details are not described herein.

The display unit 1006 is configured to display information input by the user or information provided to the user. The display unit 1006 may include a display panel 10061, and the display panel 10061 may be configured in a form of a liquid crystal display (Liquid Crystal Display, LCD), an organic light-emitting diode (Organic Light-Emitting Diode, OLED), or the like.

The user input unit 1007 may be configured to receive input digit or character information and generate key signal input related to user setting and function control of the terminal device. Specifically, the user input unit 1007 may include a touch panel 10071 and other input devices 10072. The touch panel 10071 is also referred to as a touchscreen and can collect a touch operation (such as an operation performed by the user on the touch panel 10071 or near the touch panel 10071 with a finger or by using any proper object or accessory such as a stylus) of the user on or near the touch panel 10071. The touch panel 10071 may include two parts: a touch detection apparatus and a touch controller. The touch detection apparatus detects a touch azimuth of a user, detects a signal brought by a touch operation, and transmits the signal to the touch controller. The touch controller receives touch information from the touch detection apparatus, converts the touch information into touchpoint coordinates, and sends the touchpoint coordinates to the processor 1010, and can receive a command sent by the processor 1010 and execute the command. In addition, the touch panel 10071 may be implemented in a plurality of forms, for example, as a resistive, capacitive, infrared, or surface acoustic wave touch panel. In addition to the touch panel 10071, the user input unit 1007 may further include other input devices 10072. Specifically, the other input devices 10072 may include but are not limited to a physical keyboard, a function key (such as a volume control key or a switch key), a trackball, a mouse, and a joystick. Details are not described herein.

Further, the touch panel 10071 may cover the display panel 10061. When detecting a touch operation on or near the touch panel 10071, the touch panel 10071 transmits the touch operation to the processor 1010 to determine a type of a touch event. Then, the processor 1010 provides a corresponding visual output on the display panel 10061 based on the type of the touch event. Although in FIG 10, the touch panel 10071 and the display panel 10061 act as two independent parts to implement input and output functions of the terminal device, in some embodiments, the touch panel 10071 and the display panel 10061 may be integrated to implement the input and output functions of the terminal device. This is not specifically limited herein.

The interface unit 1008 is an interface between an external apparatus and the terminal device 1000. For example, the external apparatus may include a wired or wireless headset port, an external power supply (or a battery charger) port, a wired or wireless data port, a memory port, a port for connecting an apparatus with an identification module, an audio input/output (I/O) port, a video I/O port, an earphone port, and the like. The interface unit 1008 may be configured to: receive an input (for example, data information or power) from an external apparatus, and transmit the received input to one or more elements in the terminal device 1000, or may be configured to transmit data between the terminal device 1000 and the external apparatus.

The memory 1009 may be configured to store software programs and various data. The memory 1009 may primarily include a program storage area and a data storage area. The program storage area may store an operating system, an application (such as an audio play function and an image play function) required by at least one function, and the like. The data storage area may store data (such as audio data and a phone book) created based on use of the mobile phone. In addition, the memory 1009 may include a high-speed random access memory, and may further include a non-volatile memory such as a disk storage device, a flash memory device, or another volatile solid-state storage device.

The processor 1010 is a control center of the terminal device, and is connected to all components of the terminal device by using various interfaces and lines. By running or executing a software program and/or module that is stored in the memory 1009 and calling data stored in the memory 1009, the processor 1010 executes various functions of the terminal device and processes data, so as to perform overall monitoring on the terminal device. The processor 1010 may include one or more processing units. Optionally, an application processor and a modem processor may be integrated in the processor 1010. The application processor primarily processes an operating system, user interfaces, application programs, and the like. The modem processor primarily processes radio communication. It can be understood that the modem processor may alternatively be not integrated in the processor 1010.

The terminal device 1000 may further include a power supply 1011 (such as a battery) that supplies power to components. Optionally, the power supply 1011 may be logically connected to the processor 1010 through a power management system. In this way, functions such as charge management, discharge management, and power consumption management are implemented by using the power management system.

In addition, the terminal device 1000 includes some functional modules that are not shown, details of which are not described herein.

Optionally, an embodiment of this disclosure further provides a terminal device, including a processor 1010, a memory 1009, a computer program stored in the memory 1009 and capable of running on the processor 1010. When the computer program is executed by the processor 1010, the processes of the method for processing terminal device capability information embodiment are implemented, with the same technical effect achieved. To avoid repetition, details are not described herein again.

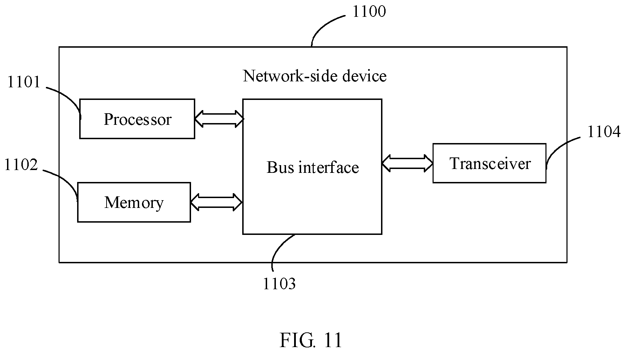

Referring to FIG 11, FIG 11 is a structural diagram of another network-side device according to an embodiment of this disclosure. As shown in FIG 11, the network-side device 1100 includes: a processor 1101, a memory 1102, a bus interface 1103, and a transceiver 1104, where the processor 1101, the memory 1102, and the transceiver 1104 are all connected to the bus interface 1103.

In this embodiment of this disclosure, the network-side device 1100 further includes a computer program stored in the memory 1102 and capable of running on the processor 1101. When the computer program is executed by the processor 1101, the following step is implemented:
receiving a first message transmitted by a terminal device.

The first message includes first information, and the first information includes information used for indicating that a size of capability information of the terminal device is greater than a maximum size of a PDCP SDU.

Optionally, when the computer program is executed by the processor 1101, the following step is further implemented:
receiving capability information of the terminal device that is transmitted by the terminal device by using at least one PDCP SDU based on a reporting manner.

Capability information carried by any one of the at least one PDCP SDU is partial capability information of the terminal device.

Optionally, the reporting manner includes:
reporting all capability information of the terminal device in a radio resource control RRC message segmentation manner; or
reporting partial capability information of the terminal device.

Optionally, when the computer program is executed by the processor 1101, the following step is further implemented:
before the capability information of the terminal device that is transmitted by the terminal device by using the at least one PDCP SDU based on the reporting manner is received, transmitting a second message to the terminal device, where the second message includes second information, and the second information is used to indicate the reporting manner.

Optionally, the first message is a connection configuration complete message; or
the first message is an auxiliary message transmitted by the terminal device to the network-side device.

Optionally, before the receiving the first message transmitted by the terminal device, the method further includes:
transmitting capability request information to the terminal device.

The first message is a message transmitted in response to the capability request information.

Optionally, the first message further carries partial capability information of the terminal device.

Optionally, the first information further includes at least one of the following:
the size of the capability information of the terminal device;
information used for indicating that the terminal device supports radio resource control RRC message segmentation;
information used for indicating that the terminal device has remaining capability information that has not been reported; and
a size of the remaining capability information, where the remaining capability information is capability information other than the reported capability information in the capability information of the terminal device.

Optionally, the first information further includes at least one of the following:
the size of the capability information of the terminal device; and
information used for indicating that the terminal device supports radio resource control RRC message segmentation.

Optionally, the second message further carries capability request information.

Optionally, an embodiment of this disclosure further provides a network-side device, including a processor 1101, a memory 1102, a computer program stored in the memory 1102 and capable of running on the processor 1101. When the computer program is executed by the processor 1101, the processes of the method for processing terminal device capability information embodiment are implemented, with the same technical effect achieved. To avoid repetition, details are not described herein again.

An embodiment of this disclosure further provides a computer-readable storage medium, where a computer program is stored in the computer-readable storage medium. When the computer program is executed by a processor, processes of the foregoing embodiment of the method for processing terminal device capability information can be implemented. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It should be noted that the terms "include", "comprise", or any of their variants in this specification are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more restrictions, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially, or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this disclosure.

## Claims

1. A method for processing terminal device capability information, performed by a terminal device, **characterized by** comprising:
receiving a second message transmitted by a network-side device, wherein the second message comprises second information, the second information is used to indicate a reporting manner, and the reporting manner comprises reporting all capability information of the terminal device in a radio resource control, RRC, message segmentation manner;
transmitting (301) a first message to the network-side device when a size of capability information of the terminal device is greater than a maximum size of a packet data aggregation protocol, PDCP, service data unit, SDU, wherein the first message comprises first information, and the first information comprises information used for indicating that the terminal device has remaining capability information that has not been reported;
transmitting the capability information of the terminal device by using at least one PDCP SDU based on the reporting manner, wherein capability information carried by any one of the at least one PDCP SDU is partial capability information of the terminal device.

2. The method according to claim 1, wherein
the first message is a connection configuration complete message; or
the first message is a message that is transmitted in response to capability request information transmitted by the network-side device; or
the first message is an auxiliary message transmitted by the terminal device to the network-side device;
wherein when the first message is a message that is transmitted in response to the capability request information transmitted by the network-side device, the first message further carries partial capability information of the terminal device.

3. The method according to any one of claims 1 to 2, wherein the first information further comprises at least one of the following:
the size of the capability information of the terminal device;
information used for indicating that the terminal device supports radio resource control, RRC, message segmentation;
and
a size of the remaining capability information, wherein the remaining capability information is capability information other than the reported capability information in the capability information of the terminal device.

4. The method according to claim 1, wherein the second message further carries capability request information.

5. The method according to any one of claims 1 to 2, wherein the first information further comprises at least one of the following:
the size of the capability information of the terminal device;
information used for indicating that the terminal device supports radio resource control, RRC, message segmentation.

6. A method for processing terminal device capability information, performed by a network-side device, **characterized by** comprising:
receiving (401) a first message transmitted by a terminal device, wherein the first message comprises first information, and the first information comprises information used for indicating that the terminal device has remaining capability information that has not been reported;
receiving capability information of the terminal device that is transmitted by the terminal device by using at least one PDCP SDU based on a reporting manner, wherein capability information carried by any one of the at least one PDCP SDU is partial capability information of the terminal device;
before the receiving capability information of the terminal device that is transmitted by the terminal device by using at least one PDCP SDU based on a reporting manner, the method further comprises:
transmitting a second message to the terminal device, wherein the second message comprises second information, the second information is used to indicate the reporting manner, and the reporting manner comprises reporting all capability information of the terminal device in a radio resource control, RRC, message segmentation manner.

7. The method according to claim 6, wherein before the receiving a first message transmitted by a terminal device, the method further comprises:
transmitting capability request information to the terminal device, wherein
the first message is a message transmitted in response to the capability request information.

8. The method according to claim 7, wherein the first message further carries partial capability information of the terminal device.

9. The method according to any one of claims 6 to 8, wherein the first information further comprises at least one of the following:
the size of the capability information of the terminal device;
information used for indicating that the terminal device supports radio resource control, RRC, message segmentation;
and
a size of the remaining capability information, wherein the remaining capability information is capability information other than the reported capability information in the capability information of the terminal device.

10. The method according to any one of claims 6 to 7, wherein the first information further comprises at least one of the following:
the size of the capability information of the terminal device; and
information used for indicating that the terminal device supports radio resource control, RRC, message segmentation.

11. The method according to claim 6, wherein the second message further carries capability request information.

12. The method according to claim 6, wherein
the first message is a connection configuration complete message; or
the first message is an auxiliary message transmitted by the terminal device to the network-side device.

13. A terminal device (800), **characterized by** comprising:
a receiving module, configured to, receive a second message transmitted by a network-side device, wherein the second message comprises second information, the second information is used to indicate a reporting manner, and the reporting manner comprises reporting all capability information of the terminal device in a radio resource control, RRC, message segmentation manner;
a transmitting module (801), configured to transmit a first message to the network-side device when a size of capability information of the terminal device is greater than a maximum size of a packet data aggregation protocol, PDCP, service data unit, SDU, wherein the first message comprises first information, and the first information comprises information used for indicating that the terminal device has remaining capability information that has not been reported;
a transmitting module, configured to transmit the capability information of the terminal device by using at least one PDCP SDU based on the reporting manner, wherein capability information carried by any one of the at least one PDCP SDU is partial capability information of the terminal device.

14. The terminal device according to claim 13, wherein the first information further comprises at least one of the following:
the size of the capability information of the terminal device;
information used for indicating that the terminal device supports radio resource control RRC message segmentation;
anda size of the remaining capability information, wherein the remaining capability information is capability information other than the reported capability information in the capability information of the terminal device.

15. A network-side device (900), **characterized by** comprising:
a first receiving module (901), configured to receive a first message transmitted by a terminal device; wherein the first message comprises first information, and the first information comprises information used for indicating that the terminal device has remaining capability information that has not been reported;
a second receiving module, configured to receive capability information of the terminal device that is transmitted by the terminal device by using at least one PDCP SDU based on a reporting manner, wherein capability information carried by any one of the at least one PDCP SDU is partial capability information of the terminal device;
a first transmitting module, configured to, before receiving capability information of the terminal device that is transmitted by the terminal device by using at least one PDCP SDU based on a reporting manner, transmit a second message to the terminal device, wherein the second message comprises second information, the second information is used to indicate the reporting manner, and the reporting manner comprises reporting all capability information of the terminal device in a radio resource control, RRC, message segmentation manner.

## Patentansprüche

1. Verfahren zum Verarbeiten von Endgerät-Fähigkeitsinformationen, das von einem Endgerät durchgeführt wird, **dadurch gekennzeichnet, dass** das Verfahren die folgenden Schritte aufweist:
Empfangen einer zweiten Nachricht, die von einem netzwerkseitigen Gerät übertragen wird, wobei die zweite Nachricht zweite Informationen aufweist, die zweiten Informationen verwendet werden, um eine Meldeweise anzugeben, und die Meldeweise ein Melden aller Fähigkeitsinformationen des Endgeräts in einer Radio-Resource-Control-, RRC-Nachrichtensegmentierungsweise aufweist;
Übertragen (301) einer ersten Nachricht an das netzwerkseitige Gerät, wenn eine Größe von Fähigkeitsinformationen des Endgeräts größer als eine maximale Größe einer Packet-Data-Convergence-Protocol-, PDCP-, Service-Data-Unit, SDU, ist, wobei die erste Nachricht erste Informationen aufweist und die ersten Informationen Informationen aufweisen, die verwendet werden, um anzuzeigen, dass das Endgerät verbleibende Fähigkeitsinformationen hat, die nicht gemeldet worden sind; und
Übertragen der Fähigkeitsinformationen des Endgeräts unter Verwendung mindestens einer PDCP-SDU basierend auf der Meldeweise, wobei Fähigkeitsinformationen, die von einer der mindestens einen PDCP-SDU übertragen werden, Teilfähigkeitsinformationen des Endgeräts sind.

2. Verfahren nach Anspruch 1, wobei
die erste Nachricht eine Nachricht über den Abschluss der Verbindungskonfiguration ist; oder
die erste Nachricht eine Nachricht ist, die als Antwort auf von dem netzwerkseitigen Gerät übertragene Fähigkeitsanforderungsinformationen übertragen wird; oder
die erste Nachricht eine Hilfsnachricht ist, die von dem Endgerät an das netzwerkseitige Gerät übertragen wird;
wobei, wenn die erste Nachricht eine Nachricht ist, die als Antwort auf die von dem netzwerkseitigen Gerät übertragenen Fähigkeitsanforderungsinformationen übertragen wird, die erste Nachricht ferner Teilfähigkeitsinformationen des Endgeräts trägt.

3. Verfahren nach einem der Ansprüche 1 bis 2, wobei die ersten Informationen ferner Folgendes aufweist:
die Größe der Fähigkeitsinformationen des Endgeräts; und/oder
Informationen, die verwendet werden, um anzuzeigen, dass das Endgerät Radio-Resource-Control-, RRC-, Nachrichtensegmentierung unterstützt;
und/oder
eine Größe der verbleibenden Fähigkeitsinformationen, wobei die verbleibenden Fähigkeitsinformationen andere Fähigkeitsinformationen als die gemeldeten Fähigkeitsinformationen in den Fähigkeitsinformationen des Endgeräts sind.

4. Verfahren nach Anspruch 1, wobei die zweite Nachricht ferner Fähigkeitsanforderungsinformationen trägt.

5. Verfahren nach einem der Ansprüche 1 bis 2, wobei die ersten Informationen ferner Folgendes aufweist:
die Größe der Fähigkeitsinformationen des Endgeräts; und/oder
Informationen, die verwendet werden, um anzuzeigen, dass das Endgerät die Radio-Resource-Control-, RRC-Nachrichtensegmentierung unterstützt.

6. Verfahren zum Verarbeiten von Endgerät-Fähigkeitsinformationen, das von einem netzwerkseitigen Gerät durchgeführt wird, **dadurch gekennzeichnet, dass** das Verfahren die folgenden Schritte aufweist:
Empfangen (401) einer ersten Nachricht, die von einem Endgerät übertragen wird, wobei die erste Nachricht erste Informationen aufweist und die ersten Informationen Informationen aufweisen, die verwendet werden, um anzuzeigen, dass das Endgerät verbleibende Fähigkeitsinformationen hat, die nicht gemeldet worden sind;
Empfangen von Fähigkeitsinformationen des Endgeräts, die von dem Endgerät unter Verwendung mindestens einer PDCP-SDU basierend auf einer Meldeweise übertragen werden, wobei Fähigkeitsinformationen, die von einer der mindestens einen PDCP-SDU übertragen werden, Teilfähigkeitsinformationen des Endgeräts sind;
vor dem Empfangen von Fähigkeitsinformationen des Endgeräts, die von dem Endgerät unter Verwendung mindestens einer PDCP-SDU basierend auf einer Meldeweise übertragen werden, das Verfahren ferner den folgenden Schritt aufweist:
Übertragen einer zweiten Nachricht an das Endgerät, wobei die zweite Nachricht zweite Informationen aufweist, die zweiten Informationen verwendet werden, um die Meldeweise anzugeben, und die Meldeweise ein Melden aller Fähigkeitsinformationen des Endgeräts in einer Radio-Resource-Control-, RRC-Nachrichtensegmentierungsweise aufweist.

7. Verfahren nach Anspruch 6, wobei vor dem Empfangen einer ersten Nachricht, die von einem Endgerät übertragen wird, das Verfahren ferner den folgenden Schritt aufweist:
Übertragen von Fähigkeitsanforderungsinformationen an das Endgerät, wobei
die erste Nachricht eine Nachricht ist, die als Antwort auf die Fähigkeitsanforderungsinformationen übertragen wird.

8. Verfahren nach Anspruch 7, wobei die erste Nachricht ferner Teilfähigkeitsinformationen des Endgeräts trägt.

9. Verfahren nach einem der Ansprüche 6 bis 8, wobei die ersten Informationen ferner Folgendes aufweist:
die Größe der Fähigkeitsinformationen des Endgerätes; und/oder
Informationen, die verwendet werden, um anzuzeigen, dass das Endgerät die Radio-Resource-Control-, RRC-Nachrichtensegmentierung unterstützt;
und/oder
eine Größe der verbleibenden Fähigkeitsinformationen, wobei die verbleibenden Fähigkeitsinformationen andere Fähigkeitsinformationen als die gemeldeten Fähigkeitsinformationen in den Fähigkeitsinformationen des Endgeräts sind.

10. Verfahren nach einem der Ansprüche 6 bis 7, wobei die ersten Informationen ferner Folgendes aufweist:
die Größe der Fähigkeitsinformationen des Endgeräts; und/oder
Informationen, die verwendet werden, um anzuzeigen, dass das Endgerät die Radio-Resource-Control-, RRC-Nachrichtensegmentierung unterstützt.

11. Verfahren nach Anspruch 6, wobei die zweite Nachricht ferner Fähigkeitsanforderungsinformationen trägt.

12. Verfahren nach Anspruch 6, wobei
die erste Nachricht eine Nachricht über den Abschluss der Verbindungskonfiguration ist; oder
die erste Nachricht eine Hilfsnachricht ist, die von dem Endgerät an das netzwerkseitige Gerät übertragen wird.

13. Endgerät (800), **dadurch gekennzeichnet, dass** das Endgerät Folgendes aufweist:
ein Empfangsmodul, das so konfiguriert ist, dass es eine zweite Nachricht empfängt, die von einem netzwerkseitigen Gerät übertragen wird, wobei die zweite Nachricht zweite Informationen aufweist, die zweiten Informationen verwendet werden, um eine Meldeweise anzugeben, und die Meldeweise ein Melden aller Fähigkeitsinformationen des Endgeräts in einer Radio-Resource-Control-, RRC-Nachrichtensegmentierungsweise aufweist;
ein Übertragungsmodul (801), das so konfiguriert ist, dass es eine erste Nachricht an das netzwerkseitige Gerät überträgt, wenn eine Größe von Fähigkeitsinformationen des Endgeräts größer als eine maximale Größe einer Packet-Data-Convergence-Protocol-, PDCP-, Service-Data-Unit, SDU, ist, wobei die erste Nachricht erste Informationen aufweist und die ersten Informationen Informationen aufweisen, die verwendet werden, um anzuzeigen, dass das Endgerät verbleibende Fähigkeitsinformationen hat, die nicht gemeldet worden sind;
ein Übertragungsmodul, das so konfiguriert ist, dass es die Fähigkeitsinformationen des Endgeräts unter Verwendung mindestens einer PDCP-SDU basierend auf der Meldeweise überträgt, wobei Fähigkeitsinformationen, die von einer der mindestens einen PDCP-SDU übertragen werden, Teilfähigkeitsinformationen des Endgeräts sind.

14. Endgerät nach Anspruch 13, wobei die ersten Informationen ferner Folgendes aufweist:
die Größe der Fähigkeitsinformationen des Endgeräts; und/oder
Informationen, die verwendet werden, um anzuzeigen, dass das Endgerät die für Radio-Resource-Control-, RRC-Nachrichtensegmentierung unterstützt; und/oder
eine Größe der verbleibenden Fähigkeitsinformationen, wobei die verbleibenden Fähigkeitsinformationen andere Fähigkeitsinformationen als die gemeldeten Fähigkeitsinformationen in den Fähigkeitsinformationen des Endgeräts sind.

15. Netzwerkseitiges Gerät (900), **dadurch gekennzeichnet, dass** das Gerät Folgendes aufweist:
ein erstes Empfangsmodul (901), das so konfiguriert ist, dass es eine erste Nachricht empfängt, die von einem Endgerät übertragen wird; wobei die erste Nachricht erste Informationen aufweist, und die ersten Informationen Informationen aufweisen, die verwendet werden, um anzuzeigen, dass das Endgerät verbleibende Fähigkeitsinformationen hat, die nicht gemeldet worden sind;
ein zweites Empfangsmodul, das so konfiguriert ist, dass es Fähigkeitsinformationen des Endgeräts empfängt, die von dem Endgerät unter Verwendung mindestens einer PDCP-SDU basierend auf einer Meldeweise übertragen werden, wobei Fähigkeitsinformationen, die von einer der mindestens einen PDCP-SDU übertragen werden, Teilfähigkeitsinformationen des Endgeräts sind; und
ein erstes Übertragungsmodul, das so konfiguriert ist, dass es vor dem Empfangen von Fähigkeitsinformationen des Endgeräts, die von dem Endgerät unter Verwendung mindestens einer PDCP-SDU basierend auf einer Meldeweise gesendet werden, eine zweite Nachricht an das Endgerät überträgt, wobei die zweite Nachricht zweite Informationen aufweist, die zweiten Informationen verwendet werden, um die Meldeweise anzugeben, und die Meldeweise ein Melden aller Fähigkeitsinformationen des Endgeräts in einer Radio-Resource-Control-, RRC-Nachrichtensegmentierungsweise aufweist.

## Revendications

1. Procédé de traitement d'informations de capacité de dispositif terminal, effectué par un dispositif terminal, **caractérisé en ce qu'**il comprend :
la réception d'un second message transmis par un dispositif côté réseau, dans lequel le second message comprend des secondes informations, les secondes informations sont utilisées pour indiquer un mode de notification, et le mode de notification comprend la notification de toutes les informations de capacité du dispositif terminal par segmentation de message de commande de ressources radio, RRC ;
la transmission (301) d'un premier message au dispositif côté réseau lorsqu'une taille d'informations de capacité du dispositif terminal est supérieure à une taille maximale d'une unité de données de service, SDU, de protocole d'agrégation de données par paquets, PDCP, dans lequel le premier message comprend des premières informations, et les premières informations comprennent des informations utilisées pour indiquer que le dispositif terminal présente des informations de capacité restantes qui n'ont pas été notifiées ;
la transmission des informations de capacité du dispositif terminal en utilisant au moins une SDU PDCP sur la base du mode de notification, dans lequel des informations de capacité contenues dans l'une quelconque de la au moins une SDU PDCP sont des informations de capacité partielles du dispositif terminal.

2. Procédé selon la revendication 1, dans lequel
le premier message est un message de configuration de connexion terminée ; ou
le premier message est un message qui est transmis en réponse à des informations de demande de capacité transmises par le dispositif côté réseau ; ou
le premier message est un message auxiliaire transmis par le dispositif terminal au dispositif côté réseau ;
dans lequel, lorsque le premier message est un message qui est transmis en réponse aux informations de demande de capacité transmises par le dispositif côté réseau, le premier message contient en outre des informations de capacité partielles du dispositif terminal.

3. Procédé selon l'une quelconque des revendications 1 à 2, dans lequel les premières informations comprennent en outre au moins l'un des éléments suivants :
la taille des informations de capacité du dispositif terminal ;
des informations utilisées pour indiquer que le dispositif terminal prend en charge la segmentation de message de commande de ressources radio, RRC ;
et
une taille des informations de capacité restantes, dans lequel les informations de capacité restantes sont des informations de capacité autres que les informations de capacité notifiées dans les informations de capacité du dispositif terminal.

4. Procédé selon la revendication 1, dans lequel le second message contient en outre des informations de demande de capacité.

5. Procédé selon l'une quelconque des revendications 1 à 2, dans lequel les premières informations comprennent en outre au moins l'un des éléments suivants :
la taille des informations de capacité du dispositif terminal ;
des informations utilisées pour indiquer que le dispositif terminal prend en charge la segmentation de message de commande de ressources radio, RRC.

6. Procédé de traitement d'informations de capacité de dispositif terminal, effectué par un dispositif côté réseau, **caractérisé en ce qu'**il comprend :
la réception (401) d'un premier message transmis par un dispositif terminal, dans lequel le premier message comprend des premières informations, et les premières informations comprennent des informations utilisées pour indiquer que le dispositif terminal présente des informations de capacité restantes qui n'ont pas été notifiées ;
la réception d'informations de capacité du dispositif terminal qui sont transmises par le dispositif terminal en utilisant au moins une SDU PDCP sur la base d'un mode de notification, dans lequel des informations de capacité contenues dans l'une quelconque de la au moins une SDU PDCP sont des informations de capacité partielles du dispositif terminal ;
avant la réception d'informations de capacité du dispositif terminal qui sont transmises par le dispositif terminal en utilisant au moins une SDU PDCP sur la base d'un mode de notification, le procédé comprend en outre :
la transmission d'un second message au dispositif terminal, dans lequel le second message comprend des secondes informations, les secondes informations sont utilisées pour indiquer le mode de notification, et le mode de notification comprend la notification de toutes les informations de capacité du dispositif terminal par segmentation de message de commande de ressources radio, RRC.

7. Procédé selon la revendication 6, dans lequel, avant la réception d'un premier message transmis par un dispositif terminal, le procédé comprend en outre :
la transmission d'informations de demande de capacité au dispositif terminal, dans lequel
le premier message est un message transmis en réponse aux informations de demande de capacité.

8. Procédé selon la revendication 7, dans lequel le premier message contient en outre des informations de capacité partielles du dispositif terminal.

9. Procédé selon l'une quelconque des revendications 6 à 8, dans lequel les premières informations comprennent en outre au moins l'un des éléments suivants :
la taille des informations de capacité du dispositif terminal ;
des informations utilisées pour indiquer que le dispositif terminal prend en charge la segmentation de message de commande de ressources radio, RRC ;
et
une taille des informations de capacité restantes, dans lequel les informations de capacité restantes sont des informations de capacité autres que les informations de capacité notifiées dans les informations de capacité du dispositif terminal.

10. Procédé selon l'une quelconque des revendications 6 à 7, dans lequel les premières informations comprennent en outre au moins l'un des éléments suivants :
la taille des informations de capacité du dispositif terminal ; et
des informations utilisées pour indiquer que le dispositif terminal prend en charge la segmentation de message de commande de ressources radio, RRC.

11. Procédé selon la revendication 6, dans lequel le second message contient en outre des informations de demande de capacité.

12. Procédé selon la revendication 6, dans lequel
le premier message est un message de configuration de connexion terminée ; ou
le premier message est un message auxiliaire transmis par le dispositif terminal au dispositif côté réseau.

13. Dispositif terminal (800), **caractérisé en ce qu'**il comprend :
un module de réception, configuré pour recevoir un second message transmis par un dispositif côté réseau, dans lequel le second message comprend des secondes informations, les secondes informations sont utilisées pour indiquer un mode de notification, et le mode de notification comprend la notification de toutes les informations de capacité du dispositif terminal par segmentation de message de commande de ressources radio, RRC ;
un module de transmission (801), configuré pour transmettre un premier message au dispositif côté réseau lorsqu'une taille d'informations de capacité du dispositif terminal est supérieure à une taille maximale d'une unité de données de service, SDU, de protocole d'agrégation de données par paquets, PDCP, dans lequel le premier message comprend des premières informations, et les premières informations comprennent des informations utilisées pour indiquer que le dispositif terminal présente des informations de capacité restantes qui n'ont pas été notifiées ;
un module de transmission, configuré pour transmettre les informations de capacité du dispositif terminal en utilisant au moins une SDU PDCP sur la base du mode de notification, dans lequel des informations de capacité contenues dans l'une quelconque de la au moins une SDU PDCP sont des informations de capacité partielles du dispositif terminal.

14. Dispositif terminal selon la revendication 13, dans lequel les premières informations comprennent en outre au moins l'un des éléments suivants :
la taille des informations de capacité du dispositif terminal ;
des informations utilisées pour indiquer que le dispositif terminal prend en charge la segmentation de message de commande de ressources radio, RRC ;
et une taille des informations de capacité restantes, dans lequel les informations de capacité restantes sont des informations de capacité autres que les informations de capacité notifiées dans les informations de capacité du dispositif terminal.

15. Dispositif côté réseau (900), **caractérisé en ce qu'**il comprend :
un premier module de réception (901), configuré pour recevoir un premier message transmis par un dispositif terminal ; dans lequel le premier message comprend des premières informations, et les premières informations comprennent des informations utilisées pour indiquer que le dispositif terminal présente des informations de capacité restantes qui n'ont pas été notifiées ;
un second module de réception, configuré pour recevoir des informations de capacité du dispositif terminal qui sont transmises par le dispositif terminal en utilisant au moins une SDU PDCP sur la base d'un mode de notification, dans lequel des informations de capacité contenues dans l'une quelconque de la au moins une SDU PDCP sont des informations de capacité partielles du dispositif terminal ;
un premier module de transmission, configuré pour, avant de recevoir des informations de capacité du dispositif terminal qui sont transmises par le dispositif terminal en utilisant au moins une SDU PDCP sur la base d'un mode de notification, transmettre un second message au dispositif terminal, dans lequel le second message comprend des secondes informations, les secondes informations sont utilisées pour indiquer le mode de notification, et le mode de notification comprend la notification de toutes les informations de capacité du dispositif terminal par segmentation de message de commande de ressources radio, RRC.
